# NOUVEAU FASCICULE DE BREVET EUROPEEN

(11) **EP 0 340 053 B2**
(45) Date de publication et mention de la décision concernant l'opposition: **17.09.1997**
(45) Mention de la délivrance du brevet: 12.08.1992
(21) Numéro de dépôt: 89400805.1
(22) Date de dépôt: 22.03.1989
(51) Int. Cl.: A43B 13/12, A43B 13/18

(54) **Semelage de chaussures pour la pratique d'activités sportives et de plein air**
Schuhsohle für sportliche Aktivitäten, auch im Freien
Shoe sole for sporting and outdoor activities

(30) Priorité: 22.03.1988 FR 8804054
(43) Date de publication de la demande: 02.11.1989
(73) Titulaire: PATRICK INTERNATIONAL, F-85700 Pouzauges (FR)
(72) Inventeur: Barre, Jean-Gabriel, F-85700-Pouzauges (FR); Branger, Jena-Pierre, F-85700-Pouzauges (FR); Tellier, Joseph, F-79320-Moncoutant (FR); Figureau, Rémy, F-85700-Pouzauges (FR)
(74) Mandataire: Hasenrader, Hubert

(56) Documents cités:
- WO-A-81/03112
- DE-A- 2 733 605
- DE-A- 3 220 025
- DE-A- 3 220 215
- US-A- 2 930 149
- US-A- 4 667 423

## Description

L'invention a pour objet un semelage de chaussures pour la pratique des sports et activités analogues.

Elle concerne plus particulièrement les activités dites de plein air, pratiquées sur des terrains naturels ou améliorés, par exemple le football, le rugby, l'athlétisme, le baseball, le cricket, le cross, l'orientation pratiquée dans les pays nordiques etc...

Toute activité sportive de ce genre est faite de courses, de bonds, de démarrages, d'arrêts, d'esquives, d'efforts violents et répétés dans des positions variées, sur des terrains de qualités inégales, d'où la nécessité de chaussures spéciales, surtout par leur semelle qui doit satisfaire au mieux à trois exigences prioritaires :
- un ancrage au sol efficace pour éviter toute glissade,
- un appui au sol maximal pour absorber les chocs et restituer l'énergie emmagasinée à l'impact,
- la plus grande légèreté pour éviter toute charge inutile et la fatigue qui en résulte.

Le problème de l'ancrage au sol, le plus évident, a été résolu dès l'origine par la création de protubérances sous la semelle, appelées communément crampons, barrettes, pointes, etc... dont les formes, la taille, la disposition sont variées. Ces protubérances, de préférence peu nombreuses pour être efficaces, sont, ainsi que la semelle qui les supporte, très sollicitées et doivent par conséquent être particulièrement résistantes à l'abrasion, au cisaillement et à la déchirure, donc massives et peu légères.

Ce dispositif, efficace dans les terrains gras, présente des inconvénients importants dans les terrains souples et secs, états qui découlent non seulement du temps et des saisons, mais aussi des progrès réalisés dans les techniques modernes de construction des terrains qui rendent ceux-ci moins sensibles aux variations climatiques. Dans ces cas de plus en plus nombreux, les protubérances entraînent un appui au sol insuffisant, inégal, avec l'apparition de points durs sous la plante du pied : l'absorption des chocs et la restitution d'énergie devenant alors pratiquement nulles, il en résulte une sensation d'inconfort, de la fatigue et des risques d'accidents musculaires.

La présente invention concerne un semelage tel que défini dans le préambule de la revendication 1.

Le document WO-A-81/03 112 présente un semelage de ce type, pour lequel les protubérances fermes ont une forme globalement arrondie. Ce semelage doit être aussi léger que possible, tout en procurant une stabilité maximum du pied, une absorption des chocs et en étant résistant à l'usure. Ce document ne s'intéresse aucunement au problème de l'ancrage.

L'invention a pour but de remédier aux inconvénients précités et propose alors une semelle légère qui concilie un ancrage efficace et un appui maximal, en permettant d'obtenir concomitamment l'effet d'une semelle avec protubérances sur le plan de l'ancrage et l'effet d'une semelle sans protubérance sur le plan de l'appui au sol, donc du confort, l'absorption des chocs et la restitution d'énergie étant optimales quel que soit l'état du terrain.

Ce but est atteint grâce aux dispositions définies dans la partie caractérisante de la revendication 1.

La couche supérieure peut également comporter un patin à protubérances souples dans la zone d'appui de la voûte plantaire.

Avantageusement, pour assurer la liaison des deux couches à la frontière des ajourages sans bavures sur la surface de dessous, la couche inférieure présente en saillie sur sa surface de de dessus une bordure profilée en U et délimitant une saignée pour marquer la limite des deux couches, les patins de la couche supérieure comportant des rebords destinés à recouvrir l'aile libre de la bordure profilée précitée pour délimiter avec celle-ci ladite saignée dans laquelle pénètre une nervure du moule empêchant le matériau expansé de la couche supérieure de baver.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :
- la figure 1 est une perspective vue de dessous montrant une première forme'de réalisation de la semelle conforme à l'invention,
- la figure 2 est une élévation prise dans le plan II-II de la figure 1,
- la figure 3 est une coupe longitudinale prise suivant le plan III-III de la figure 1,
- la figure 4 est une coupe transversale prise suivant le plan IV-IV de la figure 1,
- la figure 5 est une vue de dessous illustrant une deuxième forme de réalisation de la semelle conforme à l'invention,
- la figure 6 est une coupe longitudinale prise suivant la ligne VI-VI de la figure 5,
- les figures 7 et 8 sont des coupes représentant des variantes de réalisation du détail désigné sur la figure 4 par la flèche F.
- les figures 9 et 10 sont des coupes représentant également des variantes de réalisation d'un autre détail désigné sur la figure 3 par la flèche G.

Quelle que soit la forme de réalisation choisie, la semelle comporte :
- une couche inférieure 1 en matériau dense, ferme et compact, résistant à l'abrasion, à la rupture et au cisaillement.
- et une couche supérieure 2 en matériau expansé léger et souple.

Avantageusement, la couche 1 est en caout-chouc et la couche 2 en mousse de polyuréthane, matériaux qui sont compatibles entre eux.

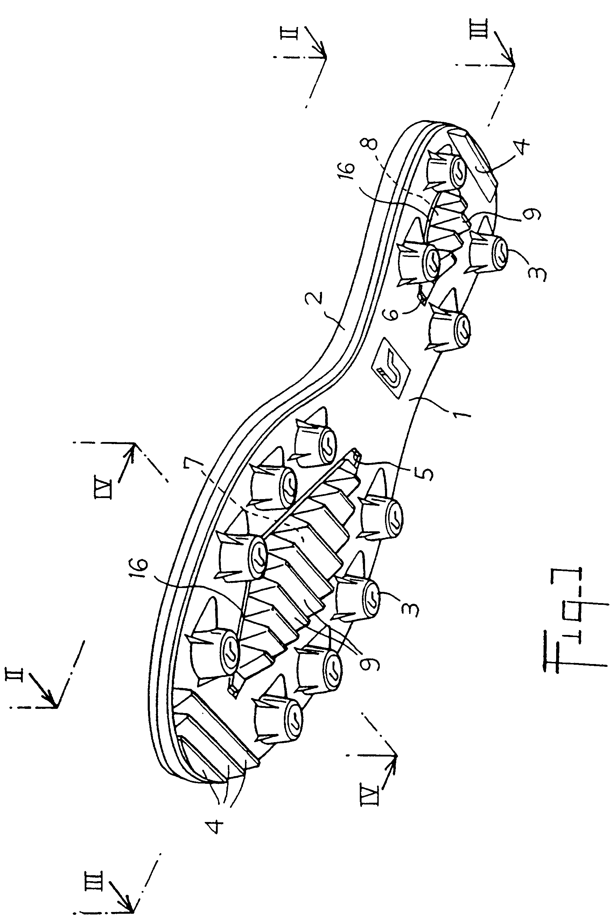

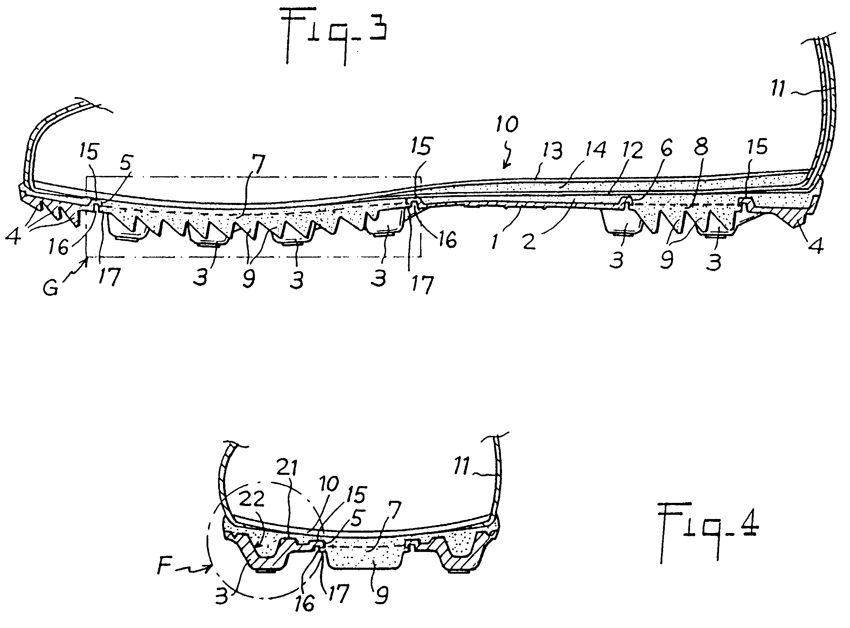

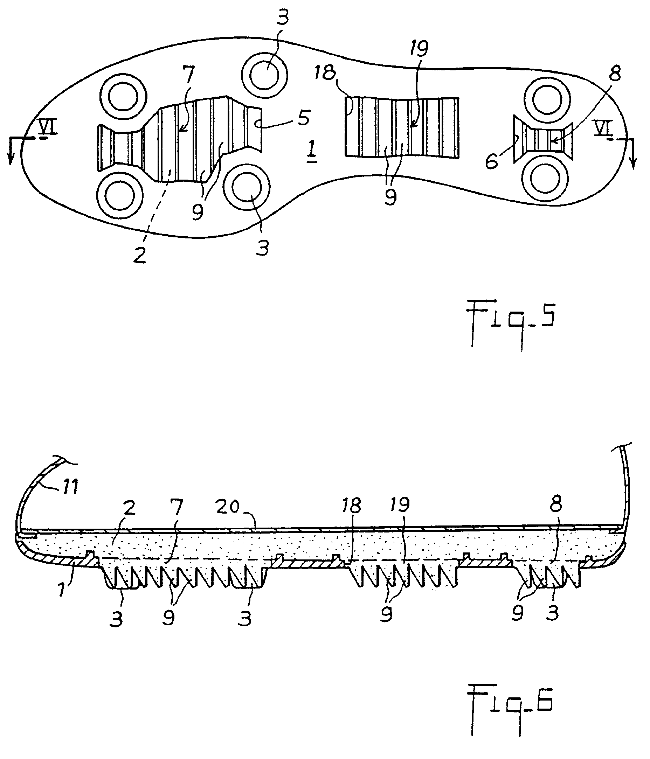

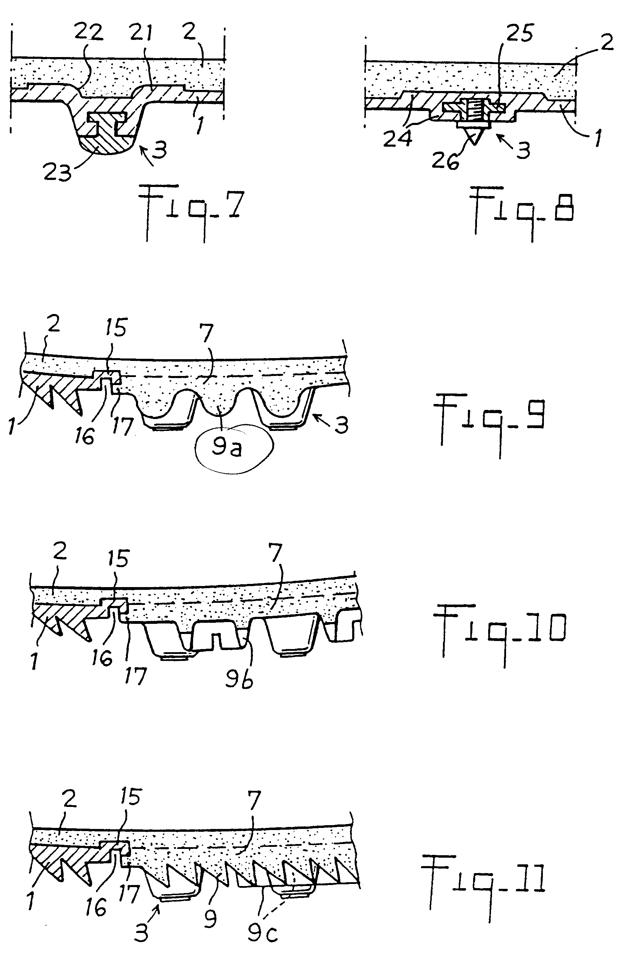

La couche inférieure 1 présente en saillie vers le bas des protubérances fermes 3 qui, dans l'exemple représenté sur les figures 1 et 5 sont des crampons étant donné que la chaussure est destinée à la pratique du football. Bien entendu, la forme de ces protubérances 3 généralement coniques dépend du sport pratiqué.

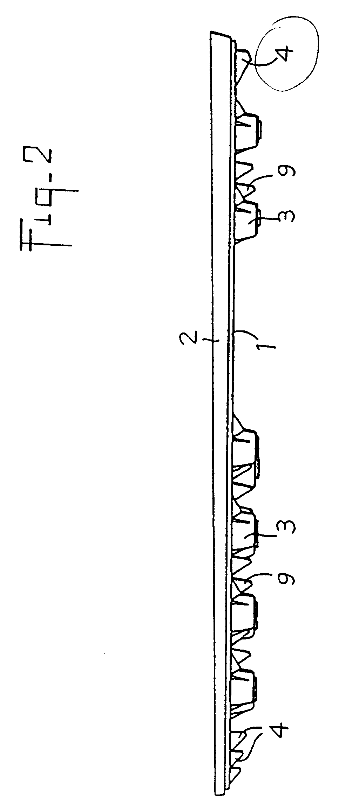

Suivant la première forme de réalisation illustrée parles figures 1 à 4, les protubérances fermes 3 sont réparties à la périphérie de l'avant-pied et du talon ; outre les crampons, elles peuvent également comporter des barrettes avant et arrière 4 ayant des flancs inclinés vers l'arrière et une hauteur inférieure à celle desdits crampons.

De toute façon, la couche inférieure 1 délimite dans la zone médiane longitudinale entre les protubérances fermes antérieures, un ajourage d'avant-pied 5 et entre les protubérances postérieures, un ajourage de talon 6.

La couche supérieure 2 recouvre la couche inférieure 1 et remplit les ajourages 5 et 6 en formant des patins 7 et 8 dont le dessous est situé sensiblement en prolongement du dessous de la couche inférieure 1.

Ces patins de la couche supérieure 2 présentent en saillie vers le bas des protubérances souples 9 qui, dans l'exemple représenté sur les figures 1 et 5, sont des dents inclinées vers l'arrière (figures 3 et 6).

L'injection et l'expansion de la couche supérieure 2 peuvent être effectuées dans un moule, non représenté, de façon à ce que cette couche assure la liaison, d'une part, avec la couche inférieure 1 en prenant forme dans les ajourages 5,6 et, d'autre part, avec une première de montage 10 à laquelle est fixée une tige 11. L'exécution de cette opération nécessite évidemment que la couche inférieure 1 ait été fabriquée auparavant, par vulcanisation par exemple, et soit déposée dans le dessous du moule d'injection avant que les côtés de ce moule soient refermés sur la forme dudit moule coiffée par la tige 11 montée sur la première 10.

Dans la forme de réalisation illustrée par la figure 3, la première 10 comporte deux feuilles en matériau fibreux 12, 13 entre lesquelles est injecté un coin 14 en polyoléfine s'étendant de l'arrière du talon jusqu'à l'avant-pied. Cette première composite assimilable dans la zone médiane à un cambrion est préparée avant le montage de la tige 11 et permet de mieux répartir l'impact du talon du pied sur le semelage.

Bien entendu la première 10 peut être simple et limitée à la feuille 12; dans ce cas, la couche supérieure 2 est plus épaisse et s'étend jusqu 'à ladite feuille 12.

La couche supérieure 2 adhère fortement à la couche inférieure 1 et épouse son relief dû aux surépaisseurs nécessaires pour assurer l'ancrage des protubérances fermes 3, la liaison du bord des ajourages 5,6 avec la couche supérieure 2...

Celle-ci épouse donc le relief de la couche inférieure 1 en compensant les différences de hauteur de celui-ci par une épaisseur suffisante de ladite couche 2 au-dessus des parties les plus saillantes. Bien entendu, cette épaisseur est déterminée par le fait que le pied ne doit pas sentir les zones dures que constituent inévitablement les crampons 3, les barrettes 4 et les bordures 15 définies ci-après.

Lors de l'expansion du matériau de la couche supérieure 2 dans le moule fermé, il est important qu'à la frontière des ajourages 5,6 de la couche inférieure 1, ce matériau expansé ne "bave" pas sur le matériau dense de la couche 1. A cet effet, cette couche inférieure 1 présente en saillie sur sa surface de dessus deux bordures profilées en U 15 dont l'aile libre délimite les ajourages 5 et 6 correspondants. Les ailes de chaque profilé délimitent une saignée 16 dans laquelle pénètre une nervure du dessous du moule ; cet ensemble : nervure-profilé constitue un joint qui, lorsque la couche inférieure 1 est positionnée dans le dessous du moule, empêche le matériau expansé formant le patin 7 ou 8 correspondant de baver ; en fait, ce matériau forme un rebord 17 qui recouvre l'aile libre du profilé 15 et la saignée 16 définit la limite du patin.

Suivant la deuxième forme de réalisation schématisée sur les figures 5 et 6, la couche inférieure 1 délimite, outre les ajourages 5 et 6, un troisième ajourage 18 situé dans la zone d'appui de la voûte plantaire; dès lors, la couche supérieure 2 comporte un troisième coussin 19 muni de protubérances souples 9.

Par ailleurs, la couche supérieure 2 est plus épaisse dès lors que la première de montage 20 est simple, au lieu d'être composite comme en 10 dans la première forme de réalisation.

Bien entendu et ainsi que cela ressort de la figure 6, cette épaisseur croit vers le talon. Il en est de même pour la réalisation de la figure 3, si l'on considère que la couche 2 et le coin 14 forment un ensemble possédant sa souplesse propre.

La surface de dessus de la couche supérieure 2 au contact de la première 10 ou 20 est unie et adhère à la surface de dessous de ladite première.

Quelle que soit la forme de réalisation choisie, les protubérances fermes 3 venues avec la couche inférieure 1 peuvent être :
- un crampon creux (figure 4) qui délimite, dans une collerette 21 faisant saillie dans le dessus de la couche 1 pour l'ancrage dudit crampon, une cuvette d'allégement 22, laquelle est remplie par le matériau expansé de la couche supérieure 2.
- un crampon enrobant une tête de renfort 23 (figure 7) et présentant aussi une collerette d'ancrage 21 avec cuvette d'allègement 22.
- un bossage 24 (figure 8) faisant saillie en-es-sous et au-dessus, ce bossage enrobant un insert métallique taraudé 25 pour le vissage d'une pointe ou d'un crampon démontable et interchangeable 26.
- ou autre

Quelle que soit la forme de réalisation choisie, les protubérances souples 9 venues avec les patins 7 et 8 de la couche supérieure 2 peuvent être :
- des dents (figure 3) inclinées vers l'arrière,
- des replis dentelés (figure 6) également inclinés vers l'arrière,
- des mini-crampons 9a (figure 9) en forme de bosses,
- des anneaux fendus 9b (figure 10),
- des barrettes ou plis longitudinaux 9c entre lesquels s'étendent des dents transversales 9.

Par ailleurs, la figure 6 montre que les protubérances souples 9 ont sensiblement la même hauteur que les protubérances fermes 3 et la figure 3 que la hauteur des protubérances souples 9 peut être différente (plus petite sur le dessin) suivant l'effet recherché et la souplesse conférée à la couche supérieure 2.

Une chaussure équipée d'un tel semelage réagit ainsi selon les terrains :
- sur terrain très mou, les protubérances fermes 3 pénètrent sans effort et les protubérances souples 9 également, de sorte que la fonction d'appui de ces dernières est moins importante que le supplément d'ancrage apporté par leur dessin agressif et leur forme anti-dérapante,
- sur terrain souple, idéal pour l'activité sportive, il y a complémentarité parfaite et équilibrée entre l'ancrage et l'appui, toutes les fonctions et possibilités du semelage étant sollicitées,
- sur terrain dur et sec, la fonction d'appui des protubérances souples 9 devient prépondérante, avec absorption des chocs et restitution d'énergie maximale ; l'appui des protubérances souples 9 limite également la déformation transversale de la semelle par creusement de sa partie centrale, suspendue entre des protubérances fermes 3 périphériques qui ne peuvent pénétrer dans le sol trop dur.

Le semelage selon l'invention résout les problèmes posés par l'exercice des activités sportives sur terrain variés : légèreté, élasticité, ancrage, absorption de chocs et restitution d'énergie.

Ainsi que cela est indiqué dans ce qui précède, la fabrication de la chaussure peut avantageusement être effectuée par moulage préalable de la couche inférieure du semelage incluant selon les choix tous inserts, métalliques ou autres.

La fabrication peut également être exécutée en une seule opération, par deux injections simultanées sur une machine à deux têtes d'injection.

En variant les couleurs des matériaux, il est possible d'obtenir des semelles bicolores, en-dessous et sur les côtés. Par ailleurs, en augmentant ou en diminuant la densité du matériau expansé, il est possible d'obtenir avec le même moule des articles plus spécialement destinés à des contrées sèches ou humides.

## Revendications

1. Semelage de chaussures pour la pratique d'activités sportives et de plein air, comprenant, d'une part, une couche intérieure (1) en matériau dense. ferme et compact, tel que du caoutchouc comportant des protubérances fermes (3) réparties à la périphérie et présentant des ajourages (5, 6) situés dans des zones d'appui, notamment celles de l'avant-pied et du talon, dans la zone médiane longitudinale entre lesdites protubérances fermes, et d'autre part, une couche supérieure légère (2) en matériau expansé, tel que de la mousse de polyuréthane, assurant la liaison de la couche inférieure avec la première de montage (10, 20) et la tige (11) d'une chaussure, et remplissant les ajourages (5, 6) de la couche inférieure (1) en formant des patins (7, 8), les protubérances fermes étant choisies dans un groupe comprenant les crampons (3) et les bossages (24),
caractérisé en ce que les protubérances fermes sont destinées à assurer un ancrage efficace au sol et sont choisies dans le groupe comprenant, outre les crampons et les bossages précités, les barrettes (4) et les pointes (26),
en ce que les patins (7, 8), dont le dessous s'étend sensiblement en prolongement du dessous de la couche inférieure; présentent, en saillie, des protubérances souples choisies dans le groupe comprenant les dents (9) inclinées vers l'arrière les replis dentelés, les mini-crampons (9a), les anneaux fendus (9b) et les barrettes longitudinales (9c).

2. Semelage selon la revendication 1, caractérisé en ce que la couche supérieure comporte également un patin (19) à protubérances souples (9) dans la zone d'appui de la voûte plantaire.

3. Semelage selon la revendication 1 ou 2, caractérisé en ce que, pour assurer la liaison des deux couches (1, 2) à la frontière des ajourages (5, 6) sans bavures sur la surface de dessous, la couche inférieure (1) présente en saillie sur sa surface de dessus une bordure (15) profilée en U et délimitant une saignée (16) pour marquer la limite des deux couches, les patins (7, 8) de la couche supérieure (2) comportant des rebords (17) destinés à recouvrir l'aile libre de la bordure profilée précitée pour délimiter avec celle-ci ladite saignée (16) dans laquelle pénètre une nervure du moule empêchant le matériau expansé de la couche supérieure (2) de baver.

4. Semelage selon l'une quelconque des revendications 1 à 3, caractérisé en ce que la couche supérieure (2) en matériau expansé a une épaisseur qui s'accroît en direction du talon.

5. Semelage selon la revendication 4, caractérisé en ce que la première de montage (10) contient un coin répartiteur (14), avantageusement en polyoléfines.

6. Semelage selon l'une quelconque des revendications 1 à 5, caractérisé en ce que la couche supérieure (2) en matériau expansé épouse et compense les différences de relief qui marquent la surface de dessus de la couche inférieure.

7. Semelage selon l'une quelconque des revendications 1 à 6, caractérisé en ce que les protubérances fermes (3), lorsqu'elles ne comportent pas d'inserts métalliques ou autres, présentent une cuvette d'allègement (22) remplie du matériau expansé de la couche supérieure (2).

8. Semelage selon l'une quelconque des revendications 1 à 7, caractérisé en ce que les protubérances souples (9) ont sensiblement la même hauteur que les protubérances fermes (3).

9. Semelage selon l'une quelconque des revendications 1 à 8, caractérisé en ce que les protubérances souples (9) ont une hauteur différente de celle des protubérances fermes (3).

## Claims

1. Shoe sole for sporting and outdoor activities, comprising, on the one hand, a bottom layer (1) of dense, rigid and compact material, such as rubber, having rigid protuberances (3) distributed along the periphery and cut-outs (5, 6) situated in the bearing zones, in particular the zones of the metatarsus and the heel, in the longitudinal median zone between said rigid protuberances, and on the other hand, a lightweight top layer (2) of expanded material, such as polyurethane foam, ensuring the connection between the bottom layer and the midsole (10, 20) and the upper (11) of a shoe, and filling the cut-outs (5, 6) of the bottom layer (1) by forming pads (7, 8), the rigid protuberances being selected from a group comprising the studs (3) and the bosses (24),
characterized in that the rigid protuberances are intended for ensuring an effective grip on the ground and are selected from the group comprising, in addition to the aforesaid studs and bosses, the cleats (4) and the spikes (26),
in that the pads (7, 8) the bottom of which extends substantially as a continuation of the bottom of the bottom layer, have projecting flexible protuberances selected from the group comprising teeth (9) inclined towards the rear, toothed folds, mini spikes (9a), split rings (9b) and longitudinal cleats (9c).

2. Sole according to claim 1, characterized in that the top layer also has a pad (19) having flexible protuberances (9) in the bearing zone of the plantar arch.

3. Sole according to claim 1 or 2, characterized in that in order to ensure the connection between the two layers (1, 2) at the boundary of the flash-free cut-outs (5, 6) on the bottom surface, the bottom layer (1) has a U-shaped skirt (15) projecting from its top surface and delimiting a groove (16) for marking the limit of the two layers, the pads (7, 8) of the top layer (2) having shoulders (17) adapted to cover the free flange of the aforesaid shaped skirt in order to delimit together with the latter the said groove (16) into which a rib of the mold penetrates, preventing the expanded material of the top layer (2) from escaping.

4. Sole according to any one of claims 1 to 3, characterized in that the top layer (2) of expanded material has a thickness which increases in the direction of the heel.

5. Sole according to claim 4, characterized in that the midsole (10) contains a distributing wedge (14), advantageously of polyolefins.

6. Sole according to any one of claims 1 to 5, characterized in that the top layer (2) of expanded material molds and compensates for the differences in relief marking the top surface of the bottom layer.

7. Sole according to any one of claims 1 to 6, characterized in that when they do not have metallic inserts or the like, the rigid protuberances (3) have a basin-shaped relief (22) filled with expanded material of the top layer (2).

8. Sole according to any one of claims 1 to 7, characterized in that the flexible protuberances (9) have substantially the same height as the rigid protuberances (3).

9. Sole according to any one of claims 1 to 8, characterized in that the flexible protuberances (9) have a different height from that of the rigid protuberances (3).

## Patentansprüche

1. Sohlenaufbau für Schuhe zur Ausübung von Sport- und Freiluftaktivitäten mit einerseits einer unteren Schicht (1) aus dichtem, festem und kompaktem Material, wie Gummi, welche am Umfang verteilte feste Vorsprünge (3) umfaßt und Aussparungen (5, 6) aufweist, die in den Abstützbereichen, insbesondere in denen des Vorderfußes und der Ferse, in der länglichen Mittelzone zwischen den genanntent festen Vorsprüngen liegen, und andererseits einer leichten oberen Schicht (2) aus geschäumten Material, wie Polyurethanschaum, die die Verbindung der unteren Schicht mit der Montagebrandsohle (10, 20) und dem Schaft (11) eines Schuhs gewährleistet und die Aussparungen (5, 6) der unteren Schicht (1) zur Bildung von Sohlenteilen (7, 8) ausfüllt, wobei die festen Vorsprünge aus einer Stollen (3) und Wülste (24) umfassenden Gruppe gewählt werden,
dadurch gekennzeichnet, daß die festen Vorsprünge dazu bestimmt sind, eine wirksame Verankerung im Boden zu gewährleisten und aus der Gruppe gewählt werden, die ausser den vorgenannten Stollen und Wülsten ferner Rippen (4) und Pinnen (26) umfaßt,
daß die Sohlenteile (7, 8), deren Unterseite sich im wesentlichen in Verlängerung der Unterseite der unteren Schicht erstreckt, nachgiebige Vorsprünge abstehen haben, welche aus der Gruppe gewählt werden, die aus den nach hinten geneigten Zähnen (9), den zahnartigen Rippen, den Ministollen (9a), den geschlitzten Ringen (9b) und den Längsstäben (9c) besteht.

2. Sohlenaufbau nach Anspruch 1, dadurch gekennzeichnet, daß die obere Schicht auch einen Sohlenteil (19) mit nachgiebigen Vorsprüngen (9) im Abstützbereich des Fußgewölbes aufweist.

3. Sohlenaufbau nach Anspruch 1 oder 2, dadurch gekennzeichnet, daß zur Sicherung der Verbindung der beiden Schichten (1, 2) an der Grenzlinie der Aussparungen (5, 6), ohne Grate auf der Oberfläche - von unten gesehen - aufzuweisen, die untere Schicht (1) auf ihrer Oberfläche - von oben gesehen - eine Randleiste (15) mit U-Profil abstehen hat, die einen Spalt (16) zur Markierung der Grenze der beiden Schichten begrenzt, wobei die Sohlenteile (7, 8) der oberen Schicht (2) Borde (17) zur Überdeckung des freien Schenkels der Profilleiste aufweisen, um mit dieser den Spalt (16) zu begrenzen, in den eine Formrippe ragt, die das geschäumte Material der oberen Schicht (2) am Herausfließen hindert.

4. Sohlenaufbau nach einem der Ansprüche 1 bis 3, dadurch gekennzeichnet, daß die obere Schicht (2) aus geschäumtem Material eine Dicke hat, die in Richtung zur Ferse zunimmt.

5. Sohlenaufbau nach Anspruch 4, dadurch gekennzeichnet, daß die Montagenbrandsohle (10) einen Verteilerkeil (14) vorteilhafterweise aus Polyolefinen, aufweist.

6. Sohlenaufbau nach einem der Ansprüche 1 bis 5, dadurch gekennzeichnet, daß die obere Schicht (2) aus geschäumtem Material sich an die Reliefünterschiede, die die Oberfläche der unteren Schicht - von oben gesehen - auszeichnen, anpaßt und diese ausgleicht.

7. Sohlenaufbau nach einem der Ansprüche 1 bis 6, dadurch gekennzeichnet, daß die festen Vorsprünge (3), wenn sie keine Metall- oder andere Einsätze enthalten, eine Entlastungsmulde (22) aufweisen, die mit dem geschäumten Material der oberen Schicht (2) gefüllt ist.

8. Sohlenaufbau nach einem der Ansprüche 1 bis 7, dadurch gekennzeichnet, daß die nachgiebigen Vorsprünge (9) im wesentlichen dieselbe Höhe haben wie die festen Vorsprünge (3).

9. Sohlenaufbau nach einem der Ansprüche 1 bis 8, dadurch gekennzeichnet, daß die nachgiebigen Vorsprünge (9) eine andere Höhe als die festen Vorsprünge (3) haben.
